# EUROPEAN PATENT APPLICATION

(11) **EP 4 516 175 A1**
(43) Date of publication of application: **05.03.2025**
(21) Application number: 23204499.0
(22) Date of filing: 18.10.2023
(51) Int. Cl.: A47J 43/046

(54) **UNIVERSAL COUPLING POWER BASE**

(30) Priority: 30.08.2023 US 202318240013
(71) Applicant: SharkNinja Operating LLC, Needham, MA 02494 (US)
(72) Inventor: LERWILL, Nick James, London, SW11 8DD (GB)
(74) Representative: Harris, Oliver John Richard

(57) **Abstract**

A food processing device is disclosed that includes a motorized base and a vessel arranged to releasably couple to the motorized base. The motorized base has a base coupling configured to rotate about a rotational axis. The base coupling is shaped to engage a vessel coupling on the vessel such that rotation of the base coupling drives rotation of the vessel coupling about the rotational axis. The vessel coupling includes a drive shaft that extends into a cavity defined by the vessel. The food processing device also includes an accessory arranged to detachably couple to the vessel's drive shaft and rotate within the vessel about the rotational axis and rotation of the accessory is driven by the vessel coupling via the drive shaft.

## Description

### FIELD

The subject disclosure relates to food processing devices, and more particularly, to food processing devices having a motorized base configured to releasably receive and power one or more detachable vessels to enable versatile food processing functionality.

### BACKGROUND

A wide variety of devices for food processing exist. However, each food processing device, by itself, tends to serve only a small number of food processing needs. This can be due to limitations in mechanical layout, which limits the way a device can be operated and used in different food processing situations. Further, food processing devices can also be limited in the extent to which they allow for the attachment of different mixing, blending, whisking, or other types of food processing attachments. This created a need for many different devices to be purchased and maintained by an individual or business to effectively attend to various food processing needs that may arise.

Certain existing kitchen tools have been developed that allow for interchangeably connecting various types of attachments capable of performing different types of food processing functions. In particular, top-driven kitchen tools (e.g., immersion blenders) sometimes allow for more attachment compatibility than bottom-driven kitchen tools (e.g., food processers). However, most top-driven kitchen tools lack versatility in the types of vessels and lids that can be used in connection with the device. Accordingly, there is a need for a food processing devices or kitchen tools capable of more versatile, evolvable, and flexible vessel and attachment capabilities.

### SUMMARY

A food processing device having a universal coupling power base (referred to herein as a "motorized base") is disclosed that is capable of releasably coupling to one or more different vessels. Each vessel can have a different shape, volumetric capacity, and/or accessory mounted within the vessel. The vessels may include any desired type of accessory, including blades, mixers, whisks, or accessories for chopping, grinding, frothing, or other food processing attachments. The accessories can either be fixed within the vessel or removable from the vessel. The motorized base can be configured to detect an attached vessel and adjust the rotational speed of a base coupling of the motorized base (which rotates a drive shaft within the vessel and drives rotation of any accessories mounted to the drive shaft within the vessel) and/or its run time accordingly to suit the attached vessel's function or capacity.

Some previously known portable blenders use blades that are fixed (non-removable) from the motorized base of the blender. In contrast, the food processing devices disclosed herein can utilize a coupling between the base and either an attachable vessel or blade holder (further attachable to the vessel) that includes the blade. In contrast to blenders with blades fixed to the motorized base, which require cleaning the blades as fixed to the based, typically by running the blender itself, the food processing devices disclosed herein only require the vessel to be cleaned after use, thereby removing the risk of water damage to components within the motorized base. Additionally, the unique coupling configuration of the disclosed food processing devices enables performance of different functions (i.e., blending, mixing, whisking, chopping, grinding, frothing, etc.) based on the vessel coupled to the motorized base, thereby reducing the total number of food processing components needed to carry out these different tasks.

Illustrative food processing devices that include a motorized base and at least one vessel arranged to releasably couple to the motorized base are described, as well as related devices and methods to provide versatile food processing capabilities. The motorized base has a base coupling configured to rotate about a rotational axis. The base coupling is shaped to engage a vessel coupling on the vessel such that rotation of the base coupling drives rotation of the vessel coupling about the rotational axis. The vessel coupling includes a drive shaft that extends into a cavity defined by the vessel. The food processing device also includes one or more accessories arranged to detachably couple to the drive shaft and rotate within the vessel about the rotational axis, and rotation of the accessory is driven by the vessel coupling via the drive shaft.

In some implementations, the rotational axis is vertical or approximately vertical. In these and other embodiments, the accessory is at least partially magnetically mounted to the drive shaft. However, in alternative embodiments, the accessory is at least partially mechanically mounted to the drive shaft. The accessory may include one or more of: a mixing paddle, a blade, a beater, a chopper, a frother, a grinder, a whisk, other types of food processing accessories, or any suitable combination of the foregoing. The motorized base may also include an accessory detection interface arranged to detect the vessel and output a detection signal. In some such embodiments, the motorized base also includes a controller in electrical communication with the accessory detection interface, and the controller is arranged to (i) receive the detection signal from the detection interface and, based on the detection signal, identify the type of vessel, and (ii) adjust, based on the detection signal, at least one of a rotational speed of the base coupling; a time period of rotation for the base coupling; and a value of another operational parameter of a food processing device. In some embodiments, the motorized base also includes one or more bayonet features arranged to releasably secure the vessel to the motorized base. In these and other embodiments, the vessel has at least one sidewall extending upwardly from the vessel coupling to define a vessel cavity into which solid and/or liquid ingredients are processed within the vessel by the accessory. The motorized base may also include a motor arranged to drive rotation of the base coupling about the rotational axis and the motor may be powered by a battery and/or a direct current (DC) power source.

In yet another aspect, a method of using a food processing device is described. The food processing device has a motorized base and one or more detachable vessels, each of the detachable vessels including a vessel coupling shaped to engage the base coupling of the motorized base such that rotation of the base coupling drives rotation of the vessel coupling about a rotational axis, and each vessel coupling including a drive shaft extending into a cavity defined by each of the one or more detachable vessels. The method includes attaching a first detachable vessel containing a first accessory to the motorized base, engaging a first detachable vessel coupling to the motorized base coupling, the first accessory being mechanically coupled to the first vessel coupling via a first drive shaft, and operating the food processing device to permit the first accessory to perform a first food processing function within the first detachable vessel. The method also includes removing the first accessory from the first drive shaft in the first detachable vessel, attaching a second accessory to the first drive shaft in the first detachable vessel, and operating the food processing device to permit the second accessory to perform a second food processing function within the first detachable vessel.

In some embodiments, the method also includes removing the first detachable vessel from the motorized base, attaching a second detachable vessel to the motorized base, and engaging a second detachable vessel coupling to the motorized base coupling, wherein a third accessory is mechanically coupled to the second detachable vessel coupling via a second drive shaft. In some such embodiments, the method also includes operating the food processing device to permit the third accessory to perform a third food processing function with the second detachable vessel. In these and other embodiments, the first, second, and third food processing functions are different. In select implementations, the method also includes adjusting at least one of a rotational speed of an accessory and a run time of an accessory based on identifying a type of detachable vessel attached to the motorized base. In various embodiments, the method also includes automatically performing one of the first food processing function and the second food processing function when the first vessel is detected and automatically performing the third food processing function when the second vessel is detected. In these and other embodiments, the first vessel and the second vessel have different volumetric capacities. In select embodiments, the first attachment has a different structure than the second attachment. The first accessory and the second accessory may include one or more of: a mixing paddle, a blade, a beater, a chopper, a frother, a grinder, a whisk, another type of food processing accessory, or any suitable combination of the foregoing.

In another aspect, a food processing system is described having a motorized base, a first vessel, and a second vessel. The motorized base has a base coupling configured to rotate about a rotational axis. The first vessel is arranged to releasably couple to the motorized base and the first vessel includes a first accessory configured to rotate within the first vessel. The second vessel is arranged to releasably couple to the motorized base and the second vessel includes a second accessory configured to rotate within the second vessel. The first vessel and the second vessel each comprise a vessel coupling shaped to engage the base coupling such that rotation of the base coupling drives rotation of the vessel coupling about the rotational axis, and rotation of the first accessory and the second accessory is driven by the vessel coupling. The motorized base also includes a detection interface arranged to detect when one of the first vessel and the second vessel is coupled to the motorized base and output a detection signal. A controller is in electrical communication with the detection interface and the controller arranged to receive the detection signal from the detection interface and, based on the detection signal, identify the type of vessel associated with one of the first and second vessels. The controller is also configured to adjust, based on the detection signal, at least one of a rotational speed of the base coupling and a time period of rotation for the base coupling.

### BRIEF DESCRIPTION OF THE DRAWINGS

So that those having ordinary skill in the art to which the disclosed system pertains will more readily understand how to make and use the same, reference may be had to the following drawings.
FIG. 1 is a perspective view of a food processing device configured in accordance with some embodiments of the subject technology that includes a motorized base and a vessel configured to releasably couple to the motorized base;
FIGS. 2A-2B show cross-sectional views of the food processing device shown in FIG. 1, with FIG. 2A showing the vessel uncoupled from the motorized base and FIG. 2B showing the vessel coupled to the motorized base;
FIGS. 3A-3C show sample accessories that may be used in some embodiments of the disclosed food processing devices, in particular, FIG. 3A shows a blade accessory, FIG. 3B shows a mixing paddle accessory, and FIG. 3C shows a whisk accessory;
FIG. 4 shows a block diagram of a control system configured in accordance with some embodiments of the present disclosure; and
FIG. 5 includes a flow diagram of a process for assembling and using the disclosed food processing devices in accordance with some embodiments of the present disclosure.

### DETAILED DESCRIPTION

The subject technology overcomes many of the prior art problems associated with food processing devices and/or kitchen tools by providing various vessel attachment possibilities and food processing functions, which all may be powered by a single detachable motorized base. As described elsewhere herein, conventional food processing devices are limited in the type of vessel attachments that can be used with an associated motor mechanism. As described in detail elsewhere herein, the presently disclosed food processing devices include a motorized base arranged to releasably couple to various vessels (and drive rotation of various accessories mounted within each vessel) to perform different types of food processing functions. The motorized base may be configured to detect an attached vessel and adjust the rotational speed of the accessory and/or its run time based on the type of vessel attached and the food processing function to be performed. The values of other operational parameters of a food processing device also may be adjusted based on such detection.

The advantages, and other features of the systems and methods disclosed herein, will become more readily apparent to those having ordinary skill in the art from the following detailed description of certain preferred embodiments taken in conjunction with the drawings which set forth representative embodiments of the present invention. Like reference numerals are used herein to denote like parts. Further, words denoting orientation such as "upper", "lower", "distal", and "proximate" are merely used to help describe the location of components with respect to one another. For example, an "upper" surface of a part is merely meant to describe a surface that is separate from the "lower" surface of that same part. No words denoting orientation are used to describe an absolute orientation (i.e., where an "upper" part must always be at a higher elevation).

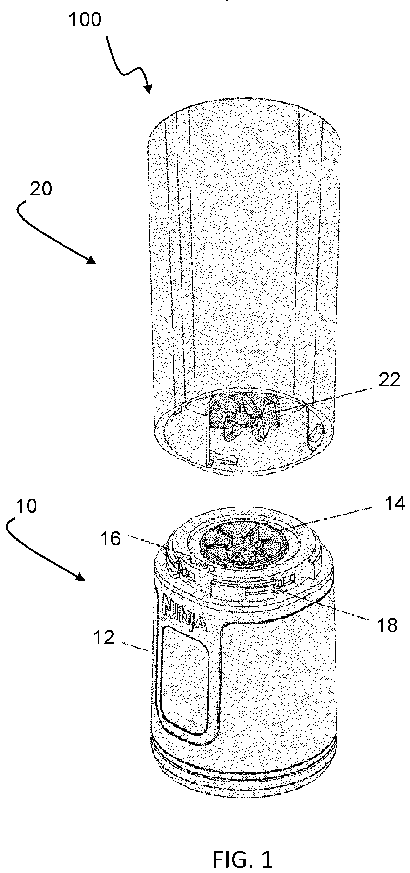

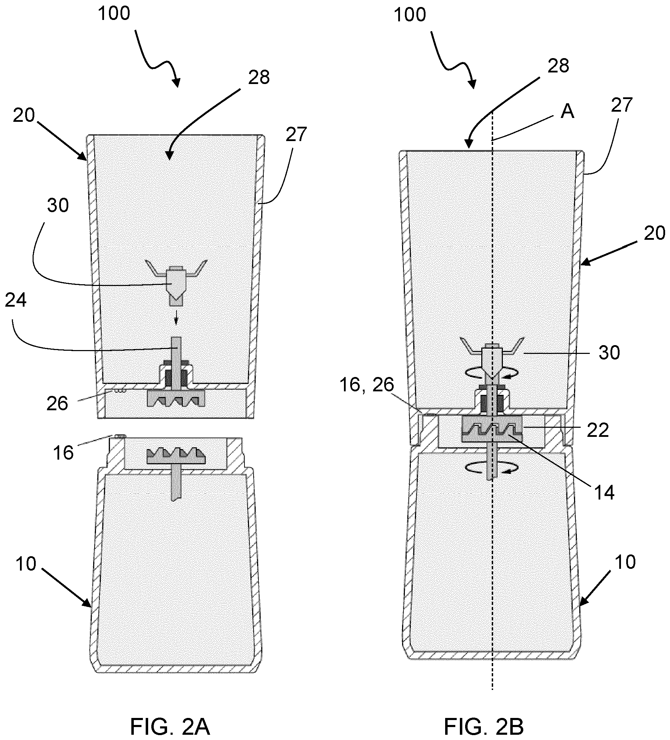

FIG. 1 illustrates an example of a food processing device 100 configured in accordance with the subject disclosure. The food processing device 100 includes a motorized base 10 and a vessel 20 arranged to releasably couple to the motorized base 10. FIG. 1 shows a perspective view of the food processing device 100 with the vessel 20 decoupled from the motorized base 10. FIGS. 2A-2B show cross-sectional views of the food processing device 100. FIG. 2A shows the vessel 20 decoupled from the motorized base 10 and FIG. 2B shows the vessel 20 coupled to the motorized base 10.

As shown in FIG. 1, the motorized base 10 has a base housing 12 with a base coupling 14 and the vessel 20 includes a vessel coupling 22 configured to engage with the base coupling 14. While not distinctly shown, the base housing 12 may include a motor arranged to drive rotation of the base coupling 14 about a rotational axis (e.g., axis A, illustrated in FIG. 2B). The motor may be a conventional motor, as is known in the art. The motor may be powered by a battery housed within the base housing 12 and/or a direct current (DC) power source.

As previously mentioned, the vessel 20 includes a vessel coupling 22. The vessel coupling 22 is shaped to engage the base coupling 14 such that rotation of the base coupling 14 drives rotation of the vessel coupling 22 about the rotational axis (A). The vessel coupling 22 also includes a drive shaft 24 extending into a cavity 28 defined by the vessel 20, as shown in FIG. 2A. The vessel coupling 22 and the base coupling 14 may be shaped to mechanically interlock with each other. For example, as shown in FIG. 1, the vessel coupling 22 may include multiple ribs or teeth that couple to grooves formed in the base coupling 14. It should be noted that although six ribs and corresponding grooves have been found to be effective, other attachment geometries and/or number of interlocking features can also be used, such as two, three, four, five, or more than six.

In some embodiments, the food processing device 100 also includes an accessory 30 arranged to detachably couple to the drive shaft 24 and rotate within the vessel 20 about the rotational axis (A). Rotation of the accessory 30 is driven by the vessel coupling 22 via the drive shaft 24. As shown in FIG. 2B, the rotational axis (A) may be vertical or approximately vertical.

The accessory 30 may be mounted to the vessel 20 (particularly to the drive shaft 24 within the vessel 20) using any desired mechanism. In some embodiments, the accessory 30 is fixedly mounted to the drive shaft 24, while in other embodiments, the accessory is removable from the drive shaft 24. In some embodiments, the accessory 30 is at least partially magnetically mounted to the drive shaft 24. In these and other embodiments, however, the accessory 30 is at least partially mechanically mounted to the drive shaft 24.

In some embodiments, the accessory 30 is integrated with the vessel 20. In some such embodiments, the vessel 20 includes an integral drive shaft 24 with an accessory 30 fixedly attached to the drive shaft 24. However, other embodiments in which the accessory 30 is removeable from the vessel 20 are also possible and contemplated herein.

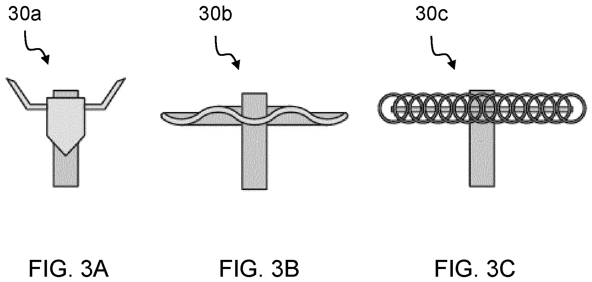

Accessory 30 may be shaped to perform any desired type of food processing function. For example, the accessory 30 may include one or more of: a mixing paddle, a blade, a beater, a chopper, a frother, a grinder, and a whisk. FIGS. 3A-3C illustrate various types of possible accessories (30a, 30b, 30c) that may be used in food processing device 100. FIG. 3A shows a blade accessory 30a, FIG. 3B shows a mixing paddle accessory 30b, and FIG. 3C shows a whisk accessory 30c.

In some embodiments, the motorized base 10 also includes an accessory detection interface 16 arranged to detect an attached vessel 20 and output a detection signal. As shown in FIGS. 2A-2B, the accessory detection interface 16 may be positioned to engage an identifying feature 26 on the vessel 20 when the vessel 20 is coupled to the motorized base 10. In some implementations, the accessory detection interface 16 includes one or more electrical connectors (e.g., pogo pins or other electrical connectors) positioned to receive and identify the identifying feature 26 on the vessel 20. In other implementations, the accessory detection interface 16 and/or 916 uses a wireless interface such as, for example, radio frequency identification (RFID) to detect an attached vessel 20. The detection interface 916 may use male-female electrical connector, magnetic sensor(s), inductive sensors, and/or any other type of electrical, mechanical and/or wireless detection device to detect the type of vessel 20 connected to the motorized base. In some implementations, one or more sensors 906 are used to detect the type of vessel 20.

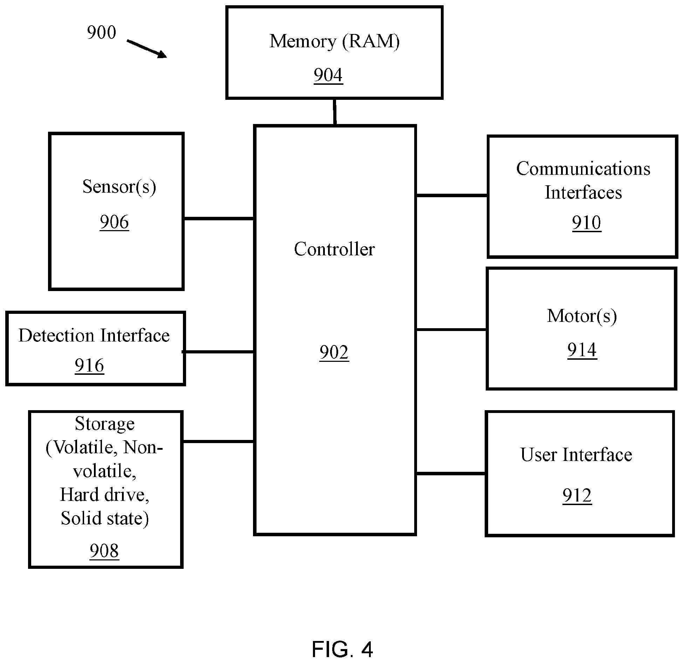

The motorized base 10 may also include a controller 902 in electrical communication with the accessory detection interface 16 and/or 916. (Embodiments of the controller 902 are discussed below with respect to FIG. 4). If present, controller 902 may be arranged to: (i) receive the detection signal from the detection interface 16 and/or 916 and, based on the detection signal, identify the type of vessel, e.g., vessel 20, and (ii) adjust, based on the detection signal, at least one of a rotational speed of the base coupling 14 and a time period of rotation for the base coupling 14. In some implementations, memory 914 and/or storage 908 include an accessory detection lookup table and/or database having a list of known detection signals associated with known types of vessels. For example, a small 12-ounce vessel may be configured to depress pins 1 and 3 of a four-pogo pin interface when the vessel 20 is connected to the motorized base 10. Controller 902 may then detect a detection signal from the accessory detection interface 16 and/or 916 indicating the pins 1 and 3 have been depressed. Controller 902 may compare the detection signal to the list in the accessory detection lookup table and, when a match is determined with one of the types of vessels in the list, controller 902 determines that vessel 20 coupled to motorized base 10 is a 12-ounce vessel. In implementations using a wireless accessory detection interface, the vessel 20 connected to motorized base 10 transmits a wireless signal including an identification code associated with the type of vessel to a receiver of the accessory detection interface 916, which then sends a detection signal based on the received wireless identification code that controller 902 can use to identify the type of vessel 20 connected to motorized base 10. Controller 902 may compare the received detection signal to an accessory detection lookup table to identify the type of vessel as discussed above. Controller 902 may use a similar technique to identify a type of vessel regardless of the physical configuration of the accessory detection interface 916.

If desired, the motorized base 10 may also include one or more bayonet features 18 arranged to releasably secure the vessel 20 to the motorized base 10. For example, in some implementations, the motorized base 10 includes two or more bayonet slots keyed to receive corresponding bayonet tabs of the vessel 20, as shown in FIG. 1. In some such implementations, clockwise movement of the vessel 20 on the motorized base 10 can attach the vessel 20 to the motorized base 10 and counterclockwise movement of the vessel 20 can release the vessel 20 from the motorized base 10. Bayonet features 18 may allow vessel 20 to be quickly and easily attached and removed from the motorized base 10. Although one particular embodiment of a bayonet fitting attachment scheme is illustrated in FIG. 1, one of ordinary skill in the relevant art will appreciate that numerous alternative coupling mechanisms for the vessel 20 are possible and contemplated herein (e.g., press-on, snap-fit, friction-fit, or other).

As shown in FIGS. 2A-2B, the vessel 20 has at least one sidewall 27 extending upwardly from the vessel coupling 22 to define a vessel cavity 28 into which solid and/or liquid ingredients may be processed within the vessel 20 by the accessory 30. During use, solids and/or liquids can be placed within the vessel 20 for processing, and the vessel 20 can then be sealed, if desired. In some such embodiments, a lid is used to seal the vessel 20. The vessel lid can have any desired shape, such as a drinkware lid, a drizzle lid, a spout lid, or other type of lid.

Although a single food processing device 100 is shown in FIGS. 1-2B and only three types of attachments 30a-30c are shown in FIG. 3, one of ordinary skill in the art will appreciate that the motorized base 10 may be configured to interchangeably receive, identify, and/or control multiple types of vessels 20 and attachments 30 in addition to those described and illustrated herein. Additionally, in further embodiments, the disclosed motorized housing 10 is used to power other small appliances in addition to the vessels 20 described herein.

In some implementations, the food processing device 100 includes a control system. If present, the control system may be contained within the base housing 12. The control system may enable the food processing device 100 to detect the type of vessel 20 coupled to the motorized base 10 and, if desired, automatically adjust the output from the motorized base 10 based on the type of vessel 20 detected.

FIG. 4 is a block diagram of an illustrative control system 900 that may be housed within the base housing 12. The control system may include a microcontroller, a processor, a system-on-a-chip (SoC), a client device, and/or a physical computing device and may include hardware and/or virtual processor(s). In some implementations, control system 900 and its elements as shown in FIG. 4 each relate to physical hardware and in some implementations one, more, or all of the elements could be implemented using emulators or virtual machines. Regardless, electronic control system 900 may be implemented on physical hardware.

As shown in FIG. 4, control system 900 may include a user interface 912, having, for example, a keyboard, keypad, touchpad, or sensor readout (e.g., biometric scanner) and one or more output devices, such as displays, speakers for audio, LED indicators, and/or light indicators. Control system 900 may also include communications interfaces 910, such as a network communication unit that could include a wired communication component and/or a wireless communications component, which may be communicatively coupled to controller and/or processor 902. The network communication unit may utilize any of a variety of proprietary or standardized network protocols, such as Ethernet, TCP/IP, to name a few of many protocols, to effect communications between processor 902 and another device, network, or system. Network communication units may also comprise one or more transceivers that utilize the Ethernet, power line communication (PLC), Wi-Fi, cellular, and/or other communication methods.

Control system 900 may include a processing element, such as controller and/or processor 902, that contains one or more hardware processors, where each hardware processor may have a single or multiple processor cores. In one implementation, the processor 902 includes at least one shared cache that stores data (e.g., computing instructions) that are utilized by one or more other components of processor 902. For example, the shared cache may be a locally cached data stored in a memory for faster access by components of the processing elements that make up processor 902. Sample processors include, but are not limited to a central processing unit (CPU) and/or microprocessor. Controller and/or processor 902 may utilize a computer architecture base on, without limitation, the Intel^{®} 8051 architecture, Motorola^{®} 68HCX, Intel^{®} 80X86, and the like. The processor 902 may include, without limitation, an 8-bit, 12-bit, 16-bit, 32-bit, or 64-bit architecture. Although not illustrated in FIG. 18, the processing elements that make up processor 902 may also include one or more other types of hardware processing components, such as graphics processing units (GPUs), application specific integrated circuits (ASICs), field-programmable gate arrays (FPGAs), and/or digital signal processors (DSPs).

FIG. 4 illustrates that memory 904 may be operatively and communicatively coupled to processor 902. Memory 904 may be a non-transitory medium configured to store various types of data. For example, memory 904 may include one or more storage devices 908 that include a non-volatile storage device and/or volatile memory. Volatile memory, such as random-access memory (RAM), can be any suitable non-permanent storage device. The non-volatile storage devices 908 may include one or more disk drives, optical drives, solid-state drives (SSDs), tape drives, flash memory, read-only memory (ROM), and/or any other type memory designed to maintain data for a duration time after a power loss or shut down operation. In certain configurations, the non-volatile storage devices 908 is used to store overflow data if allocated RAM is not large enough to hold all working data. The non-volatile storage devices 908 may also be used to store programs that are loaded into the RAM when such programs are selected for execution. Data store and/or storage devices 908 may be arranged to store a plurality of food processing instruction programs associated with a plurality of food processing sequences. Such food processing instruction programs may include instruction for controller and/or processor 902 to: start or stop the motor within the motorized base 10, operate the motor at a certain RPM for a certain period of time during a particular food processing sequence, issue one or more cue instructions to user interface 912 that are output to a user to illicit a response, action, and/or input from the user.

Persons of ordinary skill in the art are aware that software programs may be developed, encoded, and compiled in a variety of computing languages for a variety of software platforms and/or operating systems and subsequently loaded and executed by processor 902. In one implementation, the compiling process of the software program transforms program code written in a programming language to another computer language such that the processor 902 is able to execute the programming code. For example, the compiling process of the software program may generate an executable program that provides encoded instructions (e.g., machine code instructions) for processor 902 to accomplish specific, non-generic, particular computing functions.

After the compiling process, the encoded instructions may be loaded as computer executable instructions or process steps to processor 902 from storage 908, from memory 904, and/or embedded within processor 902 (e.g., via a cache or on-board ROM). Processor 902 may be configured to execute the stored instructions or process steps in order to perform instructions or process steps to transform the electronic control system 900 into a non-generic, particular, specially programmed machine or apparatus. Stored data, e.g., data stored by a data store and/or storage device 908, may be accessed by processor 902 during the execution of computer executable instructions or process steps to instruct one or more components within control system 900 and/or other components or devices external to system 900.

User interface 912 can include a display, positional input device (such as a mouse, touchpad, touchscreen, or the like), keyboard, keypad, one or more buttons, or other forms of user input and output devices. The user interface components may be communicatively coupled to processor 902. When the user interface output device is or includes a display, the display can be implemented in various ways, including by a liquid crystal display (LCD) or a cathode-ray tube (CRT) or light emitting diode (LED) display, such as an OLED display. Sensors 906 may include one or more sensors that detect and/or monitor environmental conditions within or surrounding the food processing device 100, within or surrounding a vessel 20, and/or within or surrounding an accessory 30. Environmental conditions may include, without limitation, rotation, speed of rotation, and/or movement of a device or component (e.g., a motor), temperature, pressure, current, position of a device or component (e.g., whether an accessory 30 is attached to the drive shaft 24 within the vessel 20), and/or the presence of a device or component (e.g., whether an accessory 30 is connected to the vessel 20 and/or whether a vessel 20 is secured to the motorized base 10). Sensors 906 may also include one or more safety and/or interlock switches that prevent or enable operation of certain components, e.g., the motor within the motorized base 10, when certain conditions are met (e.g., enabling rotation of the drive shaft 24 only when the vessel is attached to the motorized base 10). Persons of ordinary skill in the art are aware that electronic control system 900 may include other components well known in the art, such as power sources and/or analog-to-digital converters, not explicitly shown in FIG. 4.

In some implementations, control system 900 and/or processor 902 includes an SoC having multiple hardware components, including but not limited to, a microcontroller, microprocessor or digital signal processor (DSP) core and/or multiprocessor SoCs (MPSoC) having more than one processor cores, memory blocks including a selection of read-only memory (ROM), random access memory (RAM), electronically erasable programmable read-only memory (EEPROM) and flash memory, timing sources including oscillators and phase-docked loops, peripherals including counter-timers, real-time timers and power-on reset generators, external interfaces, including industry standards such as universal serial bus (USB), FireWire, Ethernet, universal synchronous/asynchronous receiver/transmitter (USART), serial peripheral interface (SPI), analog interfaces including analog-to-digital converters (ADCs) and digital-to-analog converters (DACs), and voltage regulators and power management circuits.

An SoC includes both the hardware, described above, and software controlling the microcontroller, microprocessor and/or DSP cores, peripherals and interfaces. Most SoCs are developed from pre-qualified hardware blocks for the hardware elements (e.g., referred to as modules or components which represent an IP core or IP block), together with software drivers that control their operation. The above listing of hardware elements is not exhaustive. An SoC may include protocol stacks that drive industry-standard interfaces like a universal serial bus (USB).

Once the overall architecture of the SoC has been defined, individual hardware elements may be described in an abstract language called RTL which stands for register-transfer level. RTL is used to define the circuit behavior. Hardware elements are connected together in the same RTL language to create the full SoC design. In digital circuit design, RTL is a design abstraction which models a synchronous digital circuit in terms of the flow of digital signals (data) between hardware registers, and the logical operations performed on those signals. RTL abstraction is used in hardware description languages (HDLs) like Verilog and VHDL to create high-level representations of a circuit, from which lower-level representations and ultimately actual wiring can be derived. Design at the RTL level is typical practice in modern digital design. Verilog is standardized as Institute of Electrical and Electronic Engineers (IEEE) 1364 and is an HDL used to model electronic systems. Verilog is most commonly used in the design and verification of digital circuits at the RTL level of abstraction. Verilog may also be used in the verification of analog circuits and mixed-signal circuits, as well as in the design of genetic circuits. In some implementations, various components of control system 900 are implemented on a printed circuit board (PCB).

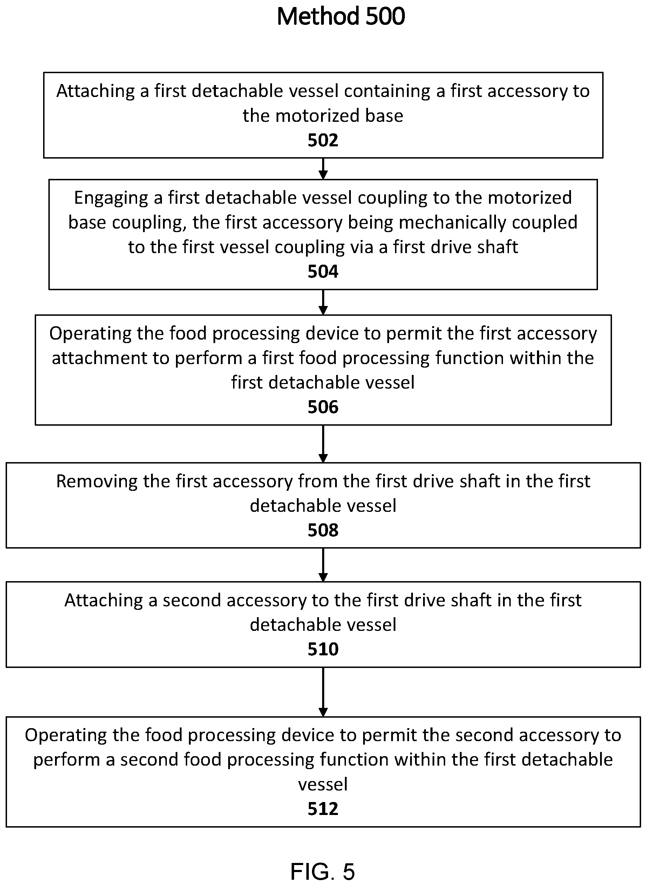

FIG. 5 includes a flow diagram of a process 500 for using a food processing device 100 as described herein. Method 500 involves using a food processing device having a motorized base and one or more detachable vessels, each of the detachable vessels including a vessel coupling shaped to engage the base coupling of the motorized base such that rotation of the base coupling drives rotation of the vessel coupling about a rotational axis, and each vessel coupling includes a drive shaft extending into a cavity defined by each of the one or more detachable vessels. Method 500 includes attaching a first detachable vessel containing a first accessory to the motorized base (502). Method 500 continues with engaging a first detachable vessel coupling to the motorized base coupling, the first accessory being mechanically coupled to the first vessel coupling via a first drive shaft (504). Method 500 also includes operating the food processing device to permit the first accessory to perform a first food processing function within the first detachable vessel (506). Method 500 continues with removing the first accessory from the first drive shaft in the first detachable vessel (508). Method 500 also includes attaching a second accessory to the first drive shaft in the first detachable vessel (510). Method 500 concludes with operating the food processing device to permit the second accessory to perform a second food processing function within the first detachable vessel (512).

In some embodiments, method 500 also includes (i) removing the first detachable vessel from the motorized base and attaching a second detachable vessel to the motorized base and (ii) engaging a second detachable vessel coupling to the motorized base coupling, wherein a third accessory is mechanically coupled to the second detachable vessel coupling via a second drive shaft. In some such embodiments, method 500 also includes operating the food processing device to permit the third accessory to perform a third food processing function with the second detachable vessel. In these and other embodiments, the first, second, and third food processing functions are different. In some embodiments, method 500 also includes automatically performing one of the first food processing function and the second food processing function when the first vessel is detected and automatically performing the third food processing function when the second vessel is detected. In these and other embodiments, the first vessel and the second vessel have different volumetric capacities.

In some embodiments, method 500 also includes adjusting at least one of a rotational speed of an accessory and a run time of an accessory based on identifying a type of detachable vessel attached to the motorized base. In select embodiments, the first attachment has a different structure than the second attachment. In these and other embodiments, the first accessory and the second accessory include one or more of: a mixing paddle, a blade, a beater, a chopper, a frother, a grinder, and a whisk.

All orientations and arrangements of the components shown herein are used by way of example only. Further, it will be appreciated by those of ordinary skill in the pertinent art that the functions of several elements are, in alternative embodiments, carried out by fewer elements or a single element. Similarly, in some embodiments, any functional element performs fewer, or different, operations than those described with respect to the illustrated embodiment. Also, functional elements shown as distinct for purposes of illustration may be incorporated within other functional elements in a particular implementation.

While the disclosure particularly shows and describes particular embodiments, those skilled in the art will understand that various changes in form and details may exist without departing from the spirit and scope of the present application as defined by the appended claims. The scope of this present application intends to cover such variations. As such, the foregoing description of embodiments of the present application does not intend to limit the full scope conveyed by the appended claims.

## Claims

1. A food processing device comprising:
a motorized base comprising a base coupling configured to rotate about a rotational axis;
a vessel arranged to releasably couple to the motorized base, the vessel comprising a vessel coupling shaped to engage the base coupling such that rotation of the base coupling drives rotation of the vessel coupling about the rotational axis, the vessel coupling including a drive shaft extending into a cavity defined by the vessel; and
an accessory arranged to detachably couple to the drive shaft and rotate within the vessel about the rotational axis, wherein rotation of the accessory is driven by the vessel coupling via the drive shaft.

2. The food processing device of claim 1, wherein the rotational axis is vertical or approximately vertical.

3. The food processing device of any of claims 1 and 2, wherein the accessory is at least partially magnetically mounted to the drive shaft.

4. The food processing device of any of claims 1-3, wherein the accessory is at least partially mechanically mounted to the drive shaft.

5. The food processing device of any of claims 1-4, wherein the accessory includes one or more of: a mixing paddle, a blade, a beater, a chopper, a frother, a grinder, and a whisk.

6. The food processing device of any of claims 1-5, wherein the motorized base further comprises an accessory detection interface arranged to detect the vessel and output a detection signal.

7. The food processing device of claim 6, wherein the motorized base includes a controller in electrical communication with the accessory detection interface, the controller arranged to:
i) receive the detection signal from the detection interface and, based on the detection signal, identify the type of vessel; and
ii) adjust, based on the detection signal, at least one of a rotational speed of the base coupling and a time period of rotation for the base coupling.

8. The food processing device of any of claims 1-7, wherein the motorized base further comprises one or more bayonet features arranged to releasably secure the vessel to the motorized base.

9. The food processing device of any of claims 1-8, wherein the vessel has at least one sidewall extending upwardly from the vessel coupling to define a vessel cavity into which solid and/or liquid ingredients may be processed within the vessel by the accessory.

10. The food processing device of any of claims 1-9, wherein the motorized base comprises a motor arranged to drive rotation of the base coupling about the rotational axis and the motor is powered by a battery and/or a direct current (DC) power source.

11. A method of using a food processing device having a motorized base and one or more detachable vessels, each of the detachable vessels including a vessel coupling shaped to engage the base coupling of the motorized base such that rotation of the base coupling drives rotation of the vessel coupling about a rotational axis, each vessel coupling including a drive shaft extending into a cavity defined by each of the one or more detachable vessels, the method comprising:
attaching a first detachable vessel containing a first accessory to the motorized base;
engaging a first detachable vessel coupling to the motorized base coupling, the first accessory being mechanically coupled to the first vessel coupling via a first drive shaft;
operating the food processing device to permit the first accessory to perform a first food processing function within the first detachable vessel;
removing the first accessory from the first drive shaft in the first detachable vessel;
attaching a second accessory to the first drive shaft in the first detachable vessel; and
operating the food processing device to permit the second accessory to perform a second food processing function within the first detachable vessel.

12. The method of claim 11 further comprising:
i) removing the first detachable vessel from the motorized base and attaching a second detachable vessel to the motorized base; and
ii) engaging a second detachable vessel coupling to the motorized base coupling,
wherein a third accessory is mechanically coupled to the second detachable vessel coupling via a second drive shaft.

13. The method of any of claims 11-12 further comprising operating the food processing device to permit the third accessory to perform a third food processing function with the second detachable vessel.

14. The method of any of claims 11-13, wherein the first, second, and third food processing functions are different.

15. A food processing system comprising:
a motorized base having a base coupling configured to rotate about a rotational axis;
a first vessel arranged to releasably couple to the motorized base, the first vessel comprising a first accessory configured to rotate within the first vessel;
a second vessel arranged to releasably couple to the motorized base, the second vessel comprising a second accessory configured to rotate within the second vessel, wherein the first vessel and the second vessel each comprise a vessel coupling shaped to engage the base coupling such that rotation of the base coupling drives rotation of the vessel coupling about the rotational axis, and rotation of the first accessory and the second accessory is driven by the vessel coupling;
a detection interface arranged to detect when one of the first vessel and the second vessel is coupled to the motorized base and output a detection signal; and
a controller in electrical communication with the detection interface, the controller arranged to:
i) receive the detection signal from the detection interface and, based on the detection signal, identify the type of vessel associated with one of the first and second vessels; and
ii) adjust, based on the detection signal, at least one of a rotational speed of the base coupling and a time period of rotation for the base coupling.
